# EUROPÄISCHE PATENTSCHRIFT

(11) **EP 0 866 818 B1**
(45) Veröffentlichungstag und Bekanntmachung des Hinweises auf die Patenterteilung: **26.05.1999**
(21) Anmeldenummer: 96943086.7
(22) Anmeldetag: 11.12.1996
(51) Int. Cl.: C08G 18/38, C08G 18/10, C08G 18/66

(54) **ZELLIGE POLYURETHAN-ELASTOMERE**
CELLULAR POLYURETHANE ELASTOMERS
ELASTOMERES POLYURETHANE CELLULAIRES

(30) Priorität: 12.12.1995 CH 3504/95; 23.04.1996 CH 1027/96
(43) Veröffentlichungstag der Anmeldung: 30.09.1998
(73) Patentinhaber: LONZA A.G., CH-3945 Gampel/Wallis (CH)
(72) Erfinder: DAUM, Ulrich, CH-4114 Hofstetten (CH); FEEKEN, Arno, D-21614 Buxtehude (DE); JARRE, Wolfgang, D-23843 Bad Oldesloe (DE); SCHMIDT, Andreas, CH-4153 Reinach (CH); SKLENARZ, Reinhard, D-21376 Garlstorf (DE)
(74) Vertreter: Ritthaler, Wolfgang, Dr.
(86) Internationale Anmeldenummer: EP9605542
(87) Internationale Veröffentlichungsnummer: WO9721749

(56) Entgegenhaltungen:
- EP-A- 0 220 641
- EP-A- 0 387 894
- FR-A- 1 448 751
- US-A- 3 752 790

## Beschreibung

Die Erfindung betrifft zellige Polyurethan-Elastomere, insbesondere solche, die eine hohe dynamische Beanspruchung erlauben.

An zellige Polyurethan-Elastomere, die in ihrer Anwendung z. B. in Federungssystemen in PKW oder LKW oder in Puffern eine hohe dynamische Beanspruchung erfahren, werden hohe Werkstoffanforderungen gestellt.

Zellige Polyurethan-Elastomere auf Basis von Methylen-bis-phenyl-isocyanat (MDI) oder Toluylendiisocyanat (TDI) waren bisher nicht in der Lage, diese hohen Anforderungen zu erfüllen und wurden daher bisher für Anwendungen mit geringerer dynamischer Beanspruchung verwendet. Als Kettenverlängerer werden in diesen Systemen üblicherweise Glykole, insbesondere Butandiol eingesetzt. Die hierbei entstehenden Polyurethan-Hartsegmente zeigen einen Schmelzbereich von ca. 180°C bis 200°C, was bei hoher dynamischer oder thermischer Beanspruchung zu einer deutlichen Verschlechterung der mechanischen Eigenschaften der daraus hergestellten Produkte führt. Standard für Anwendungen mit hoher dynamischer Beanspruchung waren daher die unter "Vulkollan" bekannten zelligen Polyurethan-Elastomere auf Basis von Naphthylendiisocyanat (NDI). Diese zelligen Polyurethan-Elastomere zeigen ein gutes Verhalten unter dynamischer Beanspruchung, allerdings weisen sie den Nachteil auf, dass die Prepolymere nicht lagerstabil sind (vgl. Kunststoff Taschenbuch, 24. Ausgabe, Carl Hanser Verlag, München 1989, S. 436ff) . Die Konsequenz für den Fertighersteller besteht folglich darin, dass er ausschliesslich eine Inline-fertigung betreiben kann, bei welcher das Prepolymer umgehend in das Fertigteil umgearbeitet wird. Die NDI-haltigen Produkte zeichnen sich zudem gegenüber den grosstechnisch hergestellten MDI-Produkten durch ein signifikant höheres Preisniveau aus.

Die Aufgabe der Erfindung bestand folglich darin, zellige Polyurethan-Elastomere zu entwickeln, die die günstigen Eigenschaften vom Methylen-bis-phenyl-isocyanat (MDI) und Toluylendiisocyanat (TDI) bezüglich Lagerfähigkeit der Prepolymeren, Verfügbarkeit und Preisgünstigkeit nutzt und bezüglich der Werkstoffeigenschaften die Anforderungen für dynamisch hochbeanspruchte Anwendungen erreicht.

Die Aufgabe konnte gelöst werden mit zelligen Polyurethan-Elastomeren gemäss Patentanspruch 1.

Erfindungsgemäss ist das zellige Polyurethan-Elastomer herstellbar durch Umsetzung von
a) einer Isocyanatkomponente, welche Methylen-bis-phenyl-isocyanat (MDI) und/oder Toluylendiisocyanat (TDI) umfaßt, in monomerer Form oder als verflüssigtes Prepolymer mit
b) Verbindungen mit mindestens zwei gegenüber Isocyanaten aktiven Wasserstoffatomen und
c) 4,4'-Methylen-bis-(3-chlor-2,6-dialkylanilin) oder einer Mischung von 4,4'-Methylen-bis-(3-chlor-2,6-dialkylanilin) mit einem oder mehreren aromatischen, aliphatischen oder cycloaliphatischen Diaminen als Kettenverlängerungsmittel, gegebenenfalls mit weiterem Polyol und
d) einem Treibmittel und gegebenenfalls in Gegenwart der üblichen Katalysatoren und weiteren Zusätzen.

In der Regel handelt es sich bei der Isocyanatkomponente MDI um das monomere 4,4'-Methylen-bis-phenyl-isocyanat, bzw. durch geringe Polyolanteile verflüssigte Prepolymere davon. Allerdings wird unter diesem Begriff auch ein MDI verstanden, welches zweckmässig bis zu 30 Gew.% Anteile an isomerem 2,4'- Methylen-bis-phenyl-isocyanat enthält. Ebenfalls unter diesen Begriff fallen Mischungen von MDI mit anderen Polyisocyanaten wie z.B mit demToluyylendiisocyanat (TDI) oder mit anderen industriell erhältlichen Diisocyanaten wie z.B. Hexamethylendiisocyanat oder Isophorondiisocyanat. Das MDI ist aber auch in Form eines Prepolymers mit bestimmtem NCO-Gehalt z. B. unter dem Namen Vibrathane® kommerziell erhältlich und einsetzbar.

Beim Toluylendiisocyanat handelt es sich in der Regel entweder um das isomerenreine 2,4-oder 2,6-Isomere oder um beliebige Mischungen dieser Isomeren untereinander. Bekannt und in technischen Mengen erhältlich ist z. B. ein Isomerengemisch der 2,4- und 2,6-Isomeren im Verhältnis 80 : 20 oder im Verhältnis 65 : 35.
Das TDI ist aber auch in Form eines Prepolymers mit bestimmten NCO-Gehalten z. B. unter dem Namen Vibrathane® kommerziell erhältlich und einsetzbar.

Geeignete Vertreter von Verbindungen mit mindestens zwei gegenüber Polyisocyanaten aktiven Wasserstoffatomen sind insbesondere Polyole wie z. B. Polyetherpolyole, Polyesterpolyole oder sonstige Polyole (z. B. Polycaprolactone) mit einem Molekulargewichtsbereich von 500 bis 10'000 vorzugsweise von 800 bis 5000. Beispielhaft aufgeführt sind die unter dem dem Markennamen Terathane® (Du Pont) vertriebenen Polytetramethylenetherglykole, die unter dem Markennamen Acclaim® (Arco) vertriebenen Poletherpolyole, die unter dem Daltorez® (ICI) oder Desmophen® (Bayer) vertriebenen Polyesterdiole oder die unter der Bezeichnung PolyTHF / CD (BASF) vertriebenen Carbonatgruppen-enthaltenden Polyole.

Die Alkylgruppe im 4,4'-Methylen-bis-(3-chlor-2,6-dialkylanilin) hat zweckmässig die Bedeutung einer Methyl-, Ethyl-, n-Propyl, i-Propyl-, n-Butyl, i-Butyl oder einer t-Butylgruppe, besonders bevorzugt jedoch einer Ethylgruppe.
Die Herstellung dieser als Kettenverlängerungsmittel eingesetzten 4,4'-Methylen-bis-(3-chlor-2,6-dialkylaniline) ist in der EP-PS 220 641 ausführlich beschrieben
Die Anwendung des 4,4'-Methylen-bis-(3-chlor-2,6-dialkylanilins) kann entweder einzeln oder als Bestandteil eines Gemisches mit weiteren aromatischen, aliphatischen oder cycloaliphatischen Aminen wie z. B. mit den bekannten Verbindungen MOCA, Dimethylthiotoluoldiamin oder mit auf Polypropylenglykol basierenden Diaminen oder Triaminen erfolgen.
Von Vorteil wird das Kettenverlängerungsmittel zusammen mit einem Polyol eingesetzt. Dabei eignen sich die obengenannten Polyole wie z. B. Polyetherpolyole, Polyesterpolyole oder sonstige Polyole (z. B. Polycaprolactone) mit einem Molekulargewichtsbereich von 500 bis 10'000 vorzugsweise von 800 bis 5000.
Zweckmässig wird die Polyolkomponente in einem Molverhältnis, bezogen auf das Kettenverlängerungsmittel, von 0.1 zu 10, bevorzugt von 0.5 zu 5 eingesetzt.

Als Treibmittel wird Wasser bzw. handelsübliche Treibmittel auf Wasserbasis mit Dispergiermittelzusatz wie z. B. das Treibmittel SM® von Bayer eingesetzt.
Das Treibmittel wird zweckmässig in einer Menge von 0.1 Mol bis 9 Mol , bezogen auf 1 Mol Ketenverlängerungsmittel eingesetzt.

Des weiteren können die üblichen Katalysatoren wie z. B. Tetramethylbutandiamin (TMBDA), Diazabicyclooctan (DABCO), Dibutylzinndilaurat (DBTC) oder organische Schwermetallverbindungen, einzeln oder in Kombination, angewendet werden. Übliche Zusätze sind z. B. Weichmacher, Stabilisatoren, Flammschutzmitteln oder Füllstoffen (vgl. z. B Kunststoff Taschenbuch, 24. Ausgabe, Carl Hanser Verlag, München 1989, S. 430).

Die Verarbeitung der Komponenten erfolgt zweckmässig über das One-shot Verfahren oder das Prepolymerverfahren, bevorzugt über das Prepolymerverfahren (vgl. z.B. Kunststoff Taschenbuch, 24. Ausgabe, Carl Hanser Verlag, München 1989, S. 429ff.).

Beim Prepolymerverfahren wird zweckmässig durch Umsetzung der Komponenten
a) Methylen-bis-phenyl-isocyanat (MDI) oder Toluylendiisocyanat (TDI) mit der Komponente
b) Verbindungen mit mindestens zwei gegenüber Isocyanaten aktiven Wasserstoffatomen ein Prepolymer hergestellt, welches einen Gehalt an freien Isocyanatgruppen von 2 Gew.% bis 28 Gew.% enthält.
MDI- bzw. TDI-Prepolymere sind mit unterschiedlichen NCO-Gehalten z. B. unter dem Markennamen Vibrathane® (Uniroyal) kommerziell erhältlich.
Die sogenannte "Polyolkomponente" besteht zweckmässig aus der Komponente
c) 4,4'-Methylen-bis-(3-chlor-2,6-dialkylanilin) oder einer Mischung von 4,4'-Methylen-bis-(3-chlor-2,6-dialkylanilin) mit einem oder mehreren aromatischen, aliphatischen oder cycloaliphatischen Diaminen als Kettenverlängerungsmittel und
d) dem Treibmittel und gegebenenfalls den üblichen Katalysatoren und weiteren Zusätzen.

Beim One-shot Verfahren wird zweckmässig die "Isocyanat-komponente"
a) Methylen-bis-phenyl-isocyanat (MDI) (gegebenenfalls mit geringen Mengen eines Polyols so modifiziert, dass eine bei niedrigen Temperaturen flüssige Komponente entsteht) oder Toluylendiisocyanat (TDI) mit der sogenannten "Polyolkomponente" bestehend zweckmässig aus den Komponenten
b) Verbindungen mit mindestens zwei gegenüber Isocyanaten aktiven Wasserstoffatomen ein Prepolymer hergestellt, welches einen Gehalt an freien Isocyanatgruppen von 2 Gew.% bis 30 Gew.% enthält.
c) 4,4'-Methylen-bis-(3-chlor-2,6-dialkylanilin) oder einer Mischung von 4,4'-Methylen-bis-(3-chlor-2,6-dialkylanilin) mit einem oder mehreren aromatischen, aliphatischen oder cycloaliphatischen Diaminen als Kettenverlängerungsmittel und
d) dem Treibmittel und gegebenenfalls der üblichen Katalysatoren und weiteren Zusätzen umgesetzt.

Die Verarbeitung der Prepolymerkomponente oder der Isocyanatkomponente der Polyolkomponente zum zelligen Polyurethan-Elastomer erfolgt auf an sich bekannte Weise, vorzugsweise in einem Giessverfahren in geschlossenen Formen (vgl. z. B. Kunststoff Taschenbuch, 24. Ausgabe, Carl Hanser Verlag, München 1989, S. 436f.).
Die erfindungsgemäss hergestellten zelligen Polyurethan-Elastomere zeichnen sich aus durch hohe dynamische Beanspruchbarkeit und Wärmeformbeständigkeit und sind daher insbesondere geeignet für die Anwendung in dynamisch hochbeanspruchten Formkörpern und Systemen zur Entkopplung von Schwingungen bei Fahrzeugen und Maschinen. Beispiele sind Federelemente in Stossdänpfern für PKW oder LKW oder Puffer.

### Beispiele (MDI)

### Prepolymer 1

1250 g (5 mol) 4,4'-Methylen-bis-phenylisocyanat (MDI) wurden bei 60 °C aufgeschmolzen und unter Rühren und Ausschluss von Luftfeuchtigkeit innert 15 Minuten mit 1000 g (0,5 mol) bei 60 °C geschmolzenem Polycaprolacton (Capa® 225 von Interox) versetzt. Man rührte noch 1 h bei 80 °C und erhielt so 2250 g eines bei 35 °C flüssigen Prepolymers mit einem NCO-Gehalt von 16,8%.

### Prepolymer 2

Kommerziell erhältliches Vibrathane® 8010 von Uniroyal. (MDI-Prepolymer mit einem NCO-Gehalt von 9,26%).

### Prepolymer 3

Kommerziell erhältliches Vibrathane® B625 von Uniroyal. (PTMEG-MDI-Prepolymer mit einem NCO-Gehalt von 6,28%).

### Polyolkomponente 1

2000 g (1 mol) Polycaprolactondiol (Capa® 220 von Interox) wurden bei 60 °C vorgelegt und mit 380 g (1 mol) geschmolzenem 4,4'-Methylen-bis-(3-chloro-2,6-diethylanilin) (LONZACURE® MCDEA von LONZA AG) vermischt. Anschiessend wurden noch folgende Zutaten eingemischt:

| | |
|---|---|
| | 27 g (1,5 mol) Wasser |
| *Katalysatoren:* | 6 g Dabco® 1028 (Air Products) |
| | 1 g Dabco® fest (Air Products) |
| | 5 g Dabco® BL17 (Air Products) |
| *Zellstabilisator:* | 20 g LK221 (Air Products) |

Man erhielt eine Polyol / Diamin / Wasser-Komponente mit einem Äqiuvalentgewicht von 348.

### Polyolkomponente 2

Bei der Polyolkomponente 1 wurden die 27 g (1,5 mol) Wasser durch 36 g (1 mol) SM® (50%iges Wasser / Sulfonat-Gemisch der Fa. Bayer-Leverkusen) ersetzt. Man erhielt bei sonst identischer Formulierung ein Polyol / Diamin / Wasser-Gemisch mit einem Äquivalentgewicht von 406.

### Polyolkomponente 3

2000 g (1 mol) Polyesterdiol (Daltorez® P720 von ICI) wurden bei 60 °C vorgelegt und mit 380 g (1 mol) geschmolzenem 4,4'-Methylen-bis-(3-chloro-2,6-diethylanilin / LONZACURE® MCDEA, LONZA AG) vermischt. Anschliessend wurden noch folgende Zutaten eingemischt:

| | |
|---|---|
| 54 g (1,5 mol) SM® | (Bayer-Leverkusen) |
| 6 g Dabco® 1028 | (Air Products) |
| 2,4 g Dabco® fest | (Air Products) |
| 5 g Dabco® BL17 | (Air Products) |
| 2 g LK221 | (Air Products) |

Man erhielt so eine Polyol / Diamin / Wasser-Komponente mit einem Äquivalentgewicht von 350.

### Polyolkomponente 4

Bei der Polyolkomponente 3 wurden anstatt 380 g (1 mol) 4,4'-Methylen-bis-(3-chloro-2,6-diethylanilin) 570 g (1,5 mol) dieser Komponente verwendet. Man erhielt bei sonst identischer Formulierung ein Polyol / Diamin / Wasser-Gemisch mit einem Äquivalentgewicht von 330.

### Polyolkomponente 5

2000 g (1 mol) Polytetramethylenetherglykol (Terathane® 2000 von Du Pont) wurden bei 60 °C vorgelegt und mit 760 g (2 mol) geschmolzenem 4,4'-Methylen-bis-(3-chloro-2,6-diethylanilin) vermischt. Anschliessend wurden noch folgende Zutaten eingemischt:

| | |
|---|---|
| 90 g (2,5 mol) SM® | (Bayer-Leverkusen) |
| 9 g Dabco® 1028 | (Air Products) |
| 3,5 g Dabco® fest | (Air Products) |
| 15 g Dabco® BL17 | (Air Products) |
| 3,5 g LK221 | (Air Products) |

Man erhielt so eine Polyol / Diamin / Wasser-Komponente mit einem Äquivalentgewicht von 262.

### Polyolkomponente 6 (Vergleich)

2000 g (1 mol) Polycaprolactondiol (Capa® 225 von Interox) wurden bei 60 °C vorgelegt und mit 180 g (2 mol) 1,4-Butandiol vermischt. Anschliessend wurden noch folgende Zutaten eingemischt:

| | |
|---|---|
| 13,5 g (0,75 mol) Wasser | |
| 6 g Dabco® 1028 | (Air Products) |
| 1 g Dabco® fest | (Air Products) |
| 5 g Dabco® BL17 | (Air Products) |
| 20 g LK221 | (Air Products) |

Man erhielt so eine Polyol / Diamin / Wasser-Komponente mit einem Äquivalentgewicht von 297.

### Herstellung der Testplatten:

PU-Niederdruckmaschine Typ PS 4 der Fa. LIM

| | |
|---|---|
| Austragsleistung: | 2,5 kg/Minute |
| Komponententemperatur: | 35 °C (Prepolymer) |
| | 50 °C (Polyolkomponente) |
| Formentemperatur: | 60 °C |
| Formenmasse: | 200 x 200 x 10 mm |
| Verarbeitung: | Giessverfahren |

Prüfung nach Lagerung von 7 Tagen bei Naturklima (26 °C / 50% Luftfeuchtigkeit)

Als Prüfkriterium wurde die Differenz (ADVR) des Druckverformungsrests einmal bei 70 °C und das zweite mal bei 80 °C gemessen. Der Druckverformungsrest wurde in Anlehnung an DIN53517 (Dicke des Prüflings = 10 mm, Verformung 40%) bestimmt.

Die Dichte wurde nach DIN53420 bestimmt.

### Ergebnisse:

| Beispiel | Prepolymer Nr. | Polyolkomp. Nr. | Dichte kg/m³ | ΔDVR % | |
|---|---|---|---|---|---|
| | | | | | |
| 1 | 1 | 1 | 550 | 3,7 | Erfindung |
| 2 | 1 | 2 | 550 | 5,6 | " |
| 3 | 2 | 3 | 500 | 8,0 | " |
| 4 | 2 | 4 | 530 | 3,0 | " |
| 5 | 3 | 5 | 400 | 4,6 | " |
| 6 | 1 | 6 | 500 | 18,2 | Vergleich |
| | | | | | |

### Beispiele (TDI)

### Prepolymer 1

Kommerziell erhältliches Vibrathane®8083 von Uniroyal. (TDI-Prepolymer mit einem NCO-Gehalt von 3,4 %).

### Polyolkomponente 1

2000 g (1 mol) Polyesterdiol (Desmophen®2001 von Bayer) wurden bei 60 °C vorgelegt und mit 1140 g geschmolzenem 4,4'-Methylen-bis-(3-chloro-2,6-diethylanilin / LONZACURE® MCDEA, LONZA AG) vermischt. Anschliessend wurden noch folgende Zutaten eingemischt:

| | |
|---|---|
| 54,0 g (3,0 mol) Wasser | |
| 25 g Dabco® 1028 | (Air Products) |
| 50 g Dabco® Crystalline | (Air Products) |
| 4,0 g Dabco® LK221E | (Air Products) |

Man erhielt so eine Polyol / Diamin / Wasser-Komponenete mit einem Äquivalentgewicht von 233,8.

### Herstellung der Testplatten:

Die Herstellung der Testplatten erfolgte analog der Beispiele (MDI).

### Ergebnisse:

| Beispiel | Prepolymer Nr. | Polyolkomp. Nr. | Dichte kg/m³ | ΔDVR % | |
|---|---|---|---|---|---|
| | | | | | |
| 1 | 1 | 1 | 710 | 1,8 | Erfindung |

## Patentansprüche

1. Zelliges Polyurethan-Elastomer, herstellbar durch Umsetzung von
a) einer Isocyanatkomponente, welche Methylen-bis-phenyl-isocyanat (MDI) und/oder Toluylendiisocyanat (TDI) umfaßt, in monomerer Form oder als verflüssigtes Prepolymer mit
b) Verbindungen mit mindestens zwei gegenüber Isocyanaten aktiven Wasserstoffatomen und
c) 4,4'-Methylen-bis-(3-chlor-2,6-dialkylanilin) oder einer Mischung von 4,4'-Methylen-bis(3-chlor-2,6-dialkylanilin) mit einem oder mehreren aromatischen, aliphatischen oder cycloaliphatischen Diaminen als Kettenverlängerungsmittel, gegebenenfalls zusammen mit weiterem Polyol, und
d) einem Treibmittel in Gegenwart eines Katalysators und gegebenenfalls weiteren Zusätzen,
dadurch gekennzeichnet, daß das Treibmittel Wasser oder ein Treibmittel auf Wasserbasis umfaßt.

2. Zelliges Polyurethan-Elastomer nach Anspruch 1, dadurch gekennzeichnet, daß das Kettenverlängerungsmittel zusammen mit einem Polyol eingesetzt wird.

3. Zelliges Polyurethan-Elastomer nach Anspruch 1 oder 2, dadurch gekennzeichnet, daß als Kettenverlängerungsmittel 4,4'-Methylen-bis-(3-chlor-2,6-diethylanilin) oder eine Mischung von 4,4'-Methylen-bis-(3-chlor-2,6-diethylanilin) mit einem oder mehreren aromatischen oder aliphatischen Diaminen eingesetzt wird.

4. Verwendung des zelligen Polyurethan-Elastomers nach einem der Ansprüche 1 bis 3 zur Herstellung von dynamisch und thermisch hochbeanspruchten Formkörpern und Entkopplungssystemen.

## Claims

1. Cellular polyurethane elastomer which can be prepared by reaction of
a) an isocyanate component, which comprises methylene-bisphenyl-isocyanate (MDI) and/or toluylene-diisocyanate (TDI), in monomeric form or a liquefied prepolymer with
b) compounds having at least two hydrogen atoms which are active towards isocyanates and
c) 4,4'-methylene-bis-(3-chloro-2,6-dialkylaniline) or a mixture of 4,4'-methylene-bis-(3-chloro-2,6-dialkylaniline) with one or more aromatic, aliphatic or cycloaliphatic diamines as chain-lengthening agents, optionally together with further polyol, and
d) a blowing agent in the presence of a catalyst and optionally further additives,
characterized in that the blowing agent comprises water or a water-based blowing agent.

2. Cellular polyurethane elastomer according to claim 1, characterized in that the chain-lengthening agent is employed together with a polyol.

3. Cellular polyurethane elastomer according to claim 1 or 2, characterized in that 4,4'-methylene-bis-(3-chloro-2,6-diethylaniline) or a mixture of 4,4'-methylene-bis-(3-chloro-2,6-diethylaniline) with one or more aromatic or aliphatic diamines is employed as the chain-lengthening agent.

4. Use of the cellular polyurethane elastomer according to one of claims 1 to 3 for the production of shaped articles and decoupling systems which are subjected to high dynamic and thermal stresses.

## Revendications

1. Elastomère polyuréthane cellulaire pouvant être préparé par mise en réaction de
a)- un composant isocyanate qui renferme du méthylène bis-phényl-isocyanate (MDI) et/ou du toluylène diisocyanate (TDI) sous forme monomère ou sous forme de prépolymère liquéfié avec
b) des compositions avec au moins deux atomes d'hydrogène actifs vis-à-vis des isocyanates et
c) 4,4'-méthylène-bis-(3-chlore-2,6-dialkylaniline) ou un mélange de 4,4'-méthylène-bis-(3-chlore-2,6-dialkylaniline) avec une ou plusieurs diamines aromatiques aliphatiques ou cycloaliphatiques en tant que prolongateur de chaîne, éventuellement avec un autre polyol, et avec
d) un agent propulseur en présence d'un catalyseur et éventuellement d'autres additifs,
caractérisé en ce que l'agent propulseur renferme de l'eau ou un agent propulseur à base d'eau.

2. Elastomère polyuréthane cellulaire selon la revendication 1, caractérisé en ce que le prolongateur de chaîne est mis en oeuvre conjointement avec un polyol.

3. Elastomère polyuréthane cellulaire selon la revendication 1 ou 2, caractérisé en ce qu'en tant que prolongateur de chaîne on met en oeuvre une 4,4'-méthylène-bis-(3-chlore-2,6-diéthylaniline) ou un mélange de 4,4'-méthylène-bis-(3-chlore-2,6-diéthylaniline) à une ou plusieurs diamines aromatiques ou aliphatiques.

4. Utilisation de l'élastomère polyuréthane cellulaire selon l'une des revendications 1 à 3, pour la préparation de corps de moulage fortement sollicité dynamiquement et thermiquement et deux systèmes de découplage.
